# EUROPÄISCHE PATENTANMELDUNG

(11) **EP 0 663 234 A2**
(43) Veröffentlichungstag der Anmeldung: **19.07.1995**
(21) Anmeldenummer: 95890007.8
(22) Anmeldetag: 12.01.1995
(51) Int. Cl.: B01D 53/84

(54) **Verfahren zum aeroben mikrobiologischen Dekontaminieren von Gasen**

(30) Priorität: 14.01.1994 AT 65/94
(71) Anmelder: OMV Aktiengesellschaft, A-1091 Wien (AT)
(72) Erfinder: Ploder, Werner, Dipl.-Ing. Dr., A-2320 Schwechat (AT) (AT); Reithner, Erik, Ing., A-1210 Wien (AT) (AT)
(74) Vertreter: Widtmann, Georg, Dipl.-Ing. Dr. techn.

(57) **Zusammenfassung**

Verfahren zum aeroben mikrobiologischen Dekontaminieren von Gasen, insbesondere Luft, welche mit gasförmigen und/oder bei Raumtemperatur flüchtigen organischen Substanzen und Mischungen dieser, z. B. Benzine, Dieselöle, Grubengase, Abluft aus Kläranlagen od. dgl., beladen ist, mit einer Schüttung mit festem, mikrobiologisch abbaubarem Substrat, z. B. Rinden, Kompost, Rindenkompost, Holzchips, Klärschlammkompost, Grünkompost, mit Mikroorganismen, wobei in das zumindest in einem Behälter angeordnete Substrat feuchtes kontaminiertes Gas, aus dem gegebenenfalls feste Teilchen und/oder Flüssigkeitstropfen abgeschieden wurden, eingeleitet und aus diesem abgezogen wird, und der Feuchtigkeitsgehalt des Substrates gesteuert wird, wobei das Substrat zeitweise mit flüssigem Wasser beaufschlagt wird, wobei das zu reinigende Gas im Gleichstrom mit dem flüssigen Wasser geführt wird und in Richtung Schwerkraft strömt.

## Beschreibung

Die Erfindung bezieht sich auf ein Verfahren zum aeroben mikrobiologischen Dekontaminieren von Gasen, insbesondere Luft, welche mit gasförmigen und/oder bei Raumtemperatur flüchtigen organischen Substanzen und Mischungen dieser, z. B. Benzinen, Dieselöl, Grubengase, Abluft aus Kläranlagen od. dgl., beladen sind.

Gasströme, insbesondere solche mit Luft, können mit Fremdstoffen bzw. Schadstoffen beladen sein. Liegen diese Schadstoffe in fester bzw. flüssiger Form vor, so kann eine Abscheidung durch Filter, seien sie mechanisch oder elektrostatisch, bis zu einem sehr hohen Grad erfolgen. Liegt jedoch eine Beladung mit Stoffen vor, die bei Raumtemperatur gasförmig sind, bzw. deren Partialdruck so groß ist, daß sie, obwohl bei Raumtemperatur flüssig, eine höhere Beladung des Gasstromes bedingen, so gestaltet sich die Abscheidung dieser Stoffe aus dem Gasstrom schwierig. Bei brennbaren Substanzen ist es bekannt, den Gasstrom einer Oxidation mit oder ohne Katalysator zu unterwerfen. Voraussetzung hiefür ist allerdings in der Regel, daß bestimmte Mindestkonzentrationen vorliegen.

Bei geringeren Konzentrationen kommen vielfach biologische, u. zw. aerobe Verfahren zum Einsatz. Hiebei ist es bekannt, daß Mikroorganismen entweder durch Mutation, also sprungartiger Änderungen der Eigenschaften oder auch durch Adaption in der Lage sind, toxische Stoffe selbst in hohen Konzentrationen abzubauen. Bei den mikrobiologischen Verfahren kann hauptsächlich zwischen Biofilter, Biowäscher und Hybridverfahren unterschieden werden. Beim Biofilter ist das Substrat, also das Trägermaterial mit den Mikroorganismen versehen und dient gleichzeitig zur Absorption der Schadstoffe, die durch die Mikroorganismen am Substrat abgebaut werden. Beim Biowäscher ist das Trägermaterial inert und der biologische Abbau erfolgt außerhalb des Absorptionsbereiches. Die Mikroorganismen sind in der Lösung suspendiert. Bei einem Hybridverfahren, das unter der Bezeichnung Tropfkörper oder Bioreaktor bekannt ist, liegt ein inertes Trägermaterial vor, auf dem die Mikroorganismen, z. B. über eine Suspension und Nährlösung angesiedelt werden. Die Absorption und der biologische Abbau erfolgt sodann in einem Bereich.

Die mikrobiologischen Verfahren sind bislang hauptsächlich dann zum Einsatz gekommen, wenn geringere Konzentrationen oft an übel riechenden Substanzen aus einem Gasstrom zu entfernen sind. Als Beispiele können hier angeführt werden: Abgase aus Kaffeeröstereien, Kläranlagen, chemischen Fabriken, Tierkörperverwertung u. dgl.

Aus der DE-A-40 17 388 wird ein Verfahren zum mikrobiologischen Abbau von Schadstoffen in einem Gasstrom mit einem Biofilter bekannt. Der Gasstrom soll von den eine Geruchsbelastung darstellenden Stoffen befreit werden, wobei der Gasstrom vorerst einem Gaswäscher zugeführt wird, und der so gereinigte und mit Feuchtigkeit beladene Gasstrom wird sodann dem Biofilter von unten zugeführt. Gleichzeitig erfolgt eine Steuerung des Feuchtegehaltes des Biofilters derart, daß einerseits die Temperatur des eintretenden Gases und anderseits die Temperatur des Biofiltersubstrates gemessen wird, wobei bei einer höheren Temperatur des Biofiltersubstrates eine Beaufschlagung desselben mit Wasser über Sprenkler, die oberhalb des Biofilters angeordnet sind, erfolgen kann. Ein derartiges Verfahren ist zum Abbau komplexer Geruchsemissionen aus Gasströmen geeignet.

In der DE-A-28 03 613 wird ein Verfahren und eine Vorrichtung zur Reinigung staubhältiger, organisch verunreinigter Abgase beschrieben. Bei diesem Verfahren wird das Abgas vorerst einer mechanischen Filterung unterzogen, u. zw. mit einem Gewebefilter und einem Koksfilter, worauf der Gasstrom mit Wasserdampf beladen wird, welcher sodann in das Biofilter zum Abbau der organischen Stoffe, beispielsweise der Abgase aus Kaffeeröstereien dient. Um einen gleichmäßigen Abbau durch die Mikroorganismen zu ermöglichen, soll die Koksschüttung adsorptiv und desorptiv auf die Verunreinigung des Gasstromes wirken, womit eine Angleichung der unterschiedlichen Konzentrationen im Gasstrom erreicht werden soll, so daß ein gleichmäßiger Abbau im Biofilter erfolgen kann.

In der DE-A-33 45 944 wird ein weiteres Verfahren zur Abscheidung gasförmiger organischer Schadstoffe beschrieben, wobei die biologische Oxidation mittels Bakterien durchgeführt wird. Dieses Verfahren ist besonders darauf abgestellt, daß auch geringste Konzentrationen an Schadstoffen im Gasstrom abgebaut werden können. Es wird hiebei auf einem adsorptiven Trägermaterial, wie beispielsweise Aktivkohle, Zeolith, Silikagel, eine Suspension mit Bakterien Mono- bzw. Mischkulturen aufgebracht, wobei der Gasstrom im Gleich- oder Gegenstrom zur Flüssigkeit fließt. Die Bakterienmischkultur kann beispielsweise einem Klärschlamm entnommen sein, wobei das an sich inaktive Trägermaterial mit Nährlösungen für die Bakterien beaufschlagt werden kann.

Ein wesentlicher Unterschied zwischen Biofiltern und Tropfkörpern besteht nun darin, daß bei den Tropfkörpern das Substrat nicht abgebaut werden kann und daher inaktiv ist. Bei Biofiltern ist das Substrat durch Mikroorganismen abbaubar und es besteht das Erfordernis, daß das Substrat im Abstand von einigen Jahren erneuert wird. Demgemäß ist die gleichmäßige Durchlüftung und auch Befeuchtung des Substrates bei Biofiltern von wesentlich größerer Bedeutung, damit keine Nester des bevorzugten mikrobiologischen Abbaues gebildet werden, womit ein unregelmäßiger Durchfluß des zur Befeuchtung dienenden Wassers und auch des beladenen Gasstromes eintritt. Die vorliegende Erfindung hat sich zum Ziel gesetzt, ein Verfahren zum aeroben mikrobiologischen Abbau von Schadstoffen zu schaffen, die in einem Gasstrom, insbesondere Luftstrom vorliegen, wobei einerseits ein Abbau der Schadstoffe bereits mit hohen Konzentrationen möglich ist und durch eine gleichmäßige Führung der Feuchtigkeit quer zur Strömungsrichtung gesehen ein gleichmäßiges Wachstum der Mikroorganismen erreicht wird, welches einen gleichmäßigen Abbau der Schadstoffe im Gasstrom erlaubt.

Das erfindungsgemäße Verfahren geht von einem Stand der Technik aus, wie er durch die DE-A-40 17 388 gegeben ist.

Das erfindungsgemäße Verfahren zum aeroben mikrobiologischen Dekontaminieren von Gasen, insbesondere Luft, welche mit gasförmigen und/oder bei Raumtemperatur flüchtigen organischen Substanzen und Mischungen dieser, z. B. Benzine, Dieselöl, Grubengase, Abluft aus Kläranlagen od. dgl., beladen ist, mit einer Schüttung mit festem, mikrobiologisch abbaubarem Substrat, z. B. Rinden, Kompost, Rindenkompost, Holzchips, Klärschlammkompost, Grünkompost, mit Mikroorganismen, wobei in das zumindest in einem Behälter angeordnete Substrat feuchtes kontaminiertes Gas aus dem, gegebenenfalls feste Teilchen und/oder Flüssigkeitströpfchen, abgeschieden wurden, eingeleitet und aus diesem abgezogen wird, und der Feuchtigkeitsgehalt des Substrates gesteuert wird, wobei das Substrat zeitweise mit flüssigem Wasser beaufschlagt wird, besteht im wesentlichen darin, daß das zu reinigende Gas im Gleichstrom mit dem flüssigen Wasser geführt wird und in Schwerkraftrichtung strömt. Durch diese Gleichrichtung der Strömung, sowohl des Abgasstromes als auch des flüssigen Wassers, wird völlig unerwartet ein gleichmäßiger Strömungswiderstand quer zur Strömungsrichtung erreicht, u, zw. sowohl für Gase als auch für Flüssigkeiten, so daß der Gasstrom, welcher gleichzeitig für die Nährstoffversorgung der Mikroorganismen Rechnung trägt und das flüssige Wasser, welches erforderlich ist, um den erhöhten Wasserdampfaustrag gegenüber dem Wasserdampfeingang mit dem mit Wasserdampf beladenen Gasstrom Rechnung zu tragen, ermöglicht, wobei gleichzeitig in den Bereichen mit bevorzugtem Gasdurchgang durch die Gleichorientierung mit der Fließrichtung des Wassers auch ein bevorzugter Durchgang des flüssigen Wassers gegeben ist.

Werden mit dem flüssigen Wasser in das Substrat Nährstoffe, insbesondere stickstoff-, phosphor- und kalihaltige Salze, eingebracht, so kann ein einheitliches Wachstum der Mikroorganismen und damit einheitlicher Abbau der Schadstoffe im Gasstrom ermöglicht werden.

Werden dem Substrat die Oberflächenspannung des Wassers herabsetzende Substanzen zugeführt, so kann selbst bei unterschiedlichster Zusammensetzung des Substrates eine besonders gleichmäßige Benetzung desselben erreicht werden, wodurch Trockeninseln od. dgl. auf besonders einfache Art vermieden werden können.

Wird das aus dem Substrat austretende flüssige Wasser in das Substrat rückgeführt, so kann eine Entsorgung des aus dem Biofilter austretenden Wassers vermieden werden, wobei weiters für eine gleichmäßige Wiederbeimpfung des Substrates durch Mikroorganismen Sorge getragen ist.

Weist zumindest 80 Gew.-% des zeitweise mit flüssigem Wasser beaufschlagten Substrates eine Korngröße zwischen 2 cm und 10 cm auf, so ist einerseits der Strömungswiderstand des Substrates an die Erfordernisse, u. zw. strömendes Gas und strömende Flüssigkeit, besonders gut angepaßt, wobei gleichzeitig eine Optimierung der Oberfläche für die anzusiedelnden Mikroorganismen vorliegt.

Liegt das mit flüssigem Wasser beaufschlagte Substrat in loser Schüttung vor, so ist auf besonders einfache Art und Weise ein gleichmäßiger Strömungswiderstand erreichbar.

Wird das Substrat an den Rändern zur Behälterwandung zeitweise verdichtet, so ist der sogenannte Wandeffekt, u. zw. daß sowohl Gase als auch Flüssigkeiten bevorzugt an Behälterwandungen entlangstreichen, auf einfache Weise vermieden, wobei gleichzeitig ein gleichmäßiger Wuchs der Mikroorganismen auch in diesen Bereichen ermöglicht ist.

Um insbesondere in der Endphase vor dem Auswechseln des Substrates auch noch einen gleichmäßigen Strömungswiderstand zu gewährleisten, kann dem Substrat inertes Material, beispielsweise Polyurethanschaum, Blähton, Ziegelsplitt od. dgl., beigemengt werden.

Wird das flüssige Wasser aus Düsen, die nach unten gerichtet sind, auf das Substrat gesprüht, so kann eine im wesentlichen druckfreie Aufbringung des flüssigen Wassers auf das Substrat erreicht werden, wodurch bevorzugte Strömungskanäle im Substrat, wie sie beispielsweise durch gerichtete Wasserstrahlen bedingt sind, vermieden werden können.

Tritt das flüssige Wasser im wesentlichen drucklos in das Substrat ein, so kann eine gleichmäßige Wasserverteilung bereits im Bereich der Einleitung des Wassers in das Substrat erreicht werden, wobei bevorzugte Strömungskanäle besonders einfach vermieden werden können.

Wird die Temperatur des flüssigen Wassers vor dem Eintritt in den Behälter auf die Temperatur des Substrates eingestellt, so kann innerhalb des Substrates eine gleichmäßige Temperatur gewährleistet sein, wobei damit eine gleichmäßige Fermentation auch in Strömungsrichtung des Gases gewährleistet ist.

Wird das Gas vor dem Eintritt in den Behälter mit Wasser beladen, so kann eine zusätzliche Wasserzufuhr, u. zw. im wesentlichen dampfförmig in das Substrat erreicht werden.

Wird das Gas vor dem Eintritt in den Behälter mit Wasser beladen, das zumindest die Temperatur des Substrates im Behälter aufweist, so wird besonders einfach ein Temperaturschock für die im Substrat vorliegenden Mikroorganismen vermieden.

Eine besonders wirksame Beladung des Gasstromes mit Wasser kann dann erreicht werden, wenn das Gas nach der Abscheidung von Feststoffen und/oder Flüssigkeitstropfen mit Wasser beladen wird.

Wird das Gas mit einer Strömungsgeschwindigkeit von 0,01 m/s bis 0,2 m/s, insbesondere von 0,0135 m/s bis 0,135 m/s durch das Substrat bewegt, so kann eine gleichmäßige Durchströmung des Substrates erreicht werden, wobei ein Mitreißen von Mikroorganismen und Zerstörung der Kulturen auf dem Substrat vermieden ist und gleichzeitig ein besonders hoher Abbau an kontaminierten Stoffen gewährleistet wird.

Wird das Gas vor der Beladung mit Wasser auf die mittlere Temperatur des Substrates erwärmt, so wird der zusätzlich durch das Gas auftretende Temperaturschock für die Mikroorganismen auf besonders einfache Weise vermieden.

Wird im austretenden Gas die Konzentration der Kontamination gemessen und bei Überschreiten einer vorgegebenen Konzentration die Strömungsgeschwindigkeit herabgesetzt, so kann bei einer bestehenden Anlage eine besonders einfache Anpassung an unterschiedliche Konzentrationen der kontaminierenden Stoffe im Gasstrom durchgeführt werden.

Wird zur Bestimmung der mittleren Temperatur des Substrates die Temperatur des austretenden Gases gemessen, so kann mit einer einzigen Temperaturmessung eine genaue mittlere Temperatur ermittelt werden, die im wesentlichen der mittleren Substrattemperatur entspricht.

Eine gleichmäßige Verteilung von Nährstoffen, insbesondere stickstoff-, phosphor- und kalihaltigen Salzen, im Substrat kann erhalten werden, wenn dasselbe vor dem Einbringen in den Behälter mit jenen beladen, insbesondere vermengt, wird.

Im folgenden wird die Erfindung anhand der Zeichnungen und der Beispiele näher erläutert:

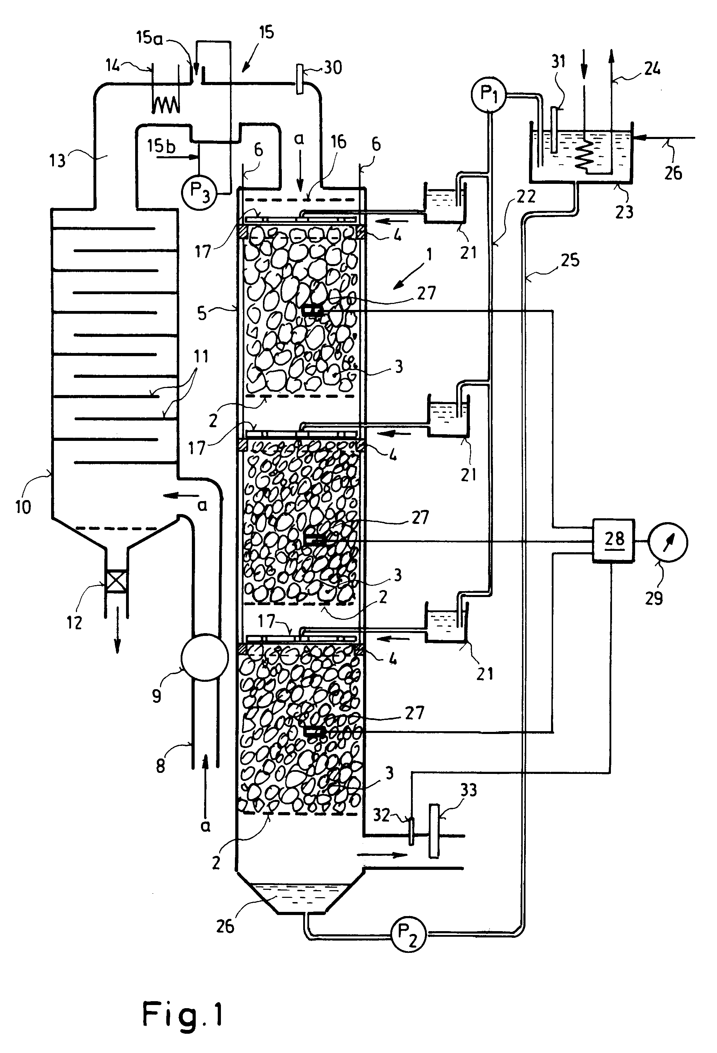

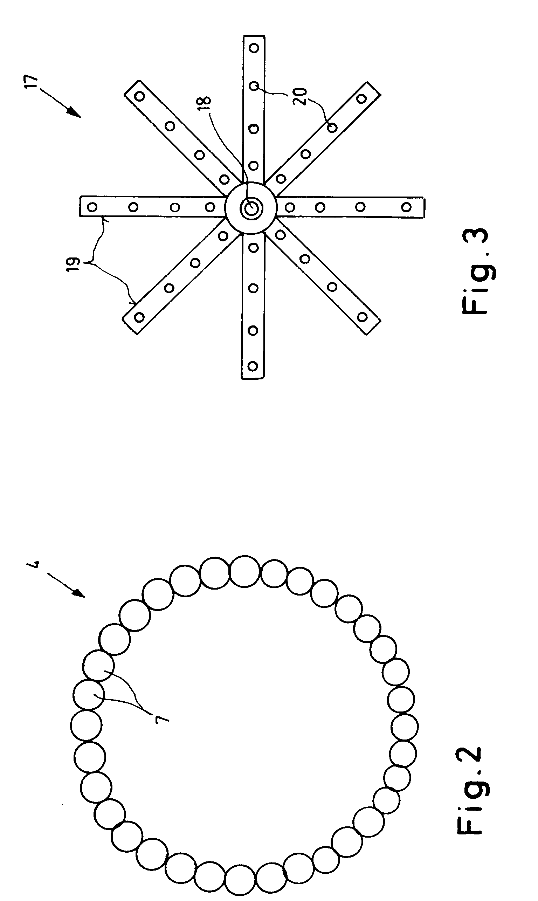

Fig. 1 eine Vorrichtung zur mikrobiologischen Dekontaminierung von Gasen in einer Kolonne und die Fig. 2 und 3 Einbauten in die Kolonne gemäß Fig. 1.

Die in Fig. 1 schematisch dargestellte Anlage weist einen Behälter 1 auf, der als Kolonne mit drei Siebböden 2 ausgebildet ist. Die Böden weisen einen Abstand von 0,70 m zueinander auf, wohingegen die Kolonne einen Durchmesser von 0,285 m aufweist. Oberhalb jedes Siebbodens 2 ist ein Substrat 3 in der Höhe von 50 cm angeordnet, so daß zwischen Substrat und dem darüberliegenden Siebboden ein Abstand von 20 cm eingehalten ist. Am oberen Ende des Substrates taucht ein Ring 4 ein, welcher der Wandung 5 der Kolonne 1 benachbart ist. Durch diese Ringe 4, die jeweils im oberen Bereich der Substrate angeordnet sind, kann über die Betätigungsstäbe 6 eine Verdichtung der Randbereiche durch Heben und Senken der Ringe 4 erreicht werden. Falls erwünscht, können auch nicht nur im Bereich des oberen Endes des Substrates, sondern auch in Abständen zueinander mehrere Ringe angeordnet werden, so daß je nach Vertikalerstreckung des Substrates eine vollständige erwünschte Verdichtung der Randbereiche erreicht werden kann.

Wie in Fig. 2 ersichtlich, besteht der Ring 4 aus einer Vielzahl von zylindrischen Buchsen 7, die miteinander verbunden sind. Diese Buchsen 7 sind mit den nicht in Fig. 2 dargestellten Betätigungsstäben 6 fix verbunden, so daß beispielsweise mit Vibration der Stäbe 6 eine Verdichtung der Substrate in sämtlichen Schüssen der Kolonne ermöglicht ist. Anstelle der zylindrischen Buchsen kann auch ein im wesentlichen sinusförmig ausgebildeter Ring zum Einsatz kommen. Wesentlich ist, daß einerseits eine möglichst geringe Beeinträchtigung der Strömungswege erfolgt und daß weiters eine Beaufschlagung des Substrates derart erfolgen kann, daß dasselbe nicht zerteilt, sondern tiefergreifend verdichtet wird.

Im folgenden wird der Weg des beladenen Gases näher beschrieben.

Das Gas gelangt über eine Leitung 8 gemäß den Pfeilen a über ein Gebläse 9 in ein Prallfilter 10, das Prallbleche 11 aufweist, an welchen Festkörperteilchen und Flüssigkeitströpfchen abgeschieden werden.

Am unteren Ende wird eine Suspension aus den abgeschiedenen Flüssigkeitströpfchen und Festkörpern über ein Ventil 12 abgezogen. Das Gas gelangt sodann über die Rohrleitung 13 zur Heizeinrichtung 14, die durch eine elektrische Wendel gebildet ist und strömt an dem Wassereinlaß 1 5a der Befeuchtungseinrichtung 15 mit über die Pumpe P3 im Kreislauf geführten Wasser mit Frischwasserzufuhr 15b vorbei, aus welchem Wasser in den Gasstrom versprüht wird. Das so gereinigte, erwärmte und mit Wasserdampf beladene Gas gelangt zu dem Behälter 1, wobei eine Verteilung des Gasstromes durch den Verteilerboden 16 so erfolgt, daß eine gleichmäßige Verteilung des Gasstromes entlang des gesamten Strömungsquerschnittes verwirklicht ist und keine bevorzugte zentrale Strömung vorliegt. Der Gasstrom, welcher gegebenenfalls von Wassertropfen befreit ist, wird sodann durch das in den einzelnen Schüssen vorgesehene Substrat 3 geleitet, wobei jeweils unter den Siebböden 2 Gassammelräume vorgesehen sind, die nach unten von einer Wasserverteileinrichtung 17 begrenzt sind. Diese Wasserverteileinrichtung 17 weist eine zentrale Wasserzuführung 18 auf, die sternförmig angeordnete Arme 19 trägt (Fig. 3). Diese Arme weisen ihrerseits eine Vielzahl von zum Substrat gerichtete Öffnungen 20 auf, durch die aus den einzelnen Reservoirs 21 das Wasser in das Substrat im wesentlichen drucklos aber auch spühend austreten kann, da die Reservoirs nur eine geringfügig höhere Lage aufweisen als die Wasserverteileinrichtung. Die einzelnen Reservoirs 21 werden über eine Leitung 22 gespeist, wobei eine Pumpe P₁ aus einem zentral angeordneten Flüssigkeitsbehälter 23 das Wasser ansaugt. Der Behälter selbst weist einerseits eine Temperiereinrichtung 24 auf und ist über eine Leitung 25 und Pumpe P₂ mit dem Sumpf 26 der Kolonne 1 verbunden, so daß das durch die Kolonne hindurchtretende Wasser, welches sich am Boden ansammelt, in den Behälter 23 rückgeleitet werden kann. Der Behälter weist weiters eine Frischwasserleitung 26 auf, so daß je nach Erfordernis entweder eine Lösung oder Frischwasser den Behälter 23 zugeführt werden kann. In dem Substrat der einzelnen Schüsse sind Thermoelemente 27 angeordnet, wobei über den Multiplexer 28 jeweils eine Verbindung mit dem Meßgerät 29 erfolgt. Mit einer festgelegten Temperatur kann einerseits die Temperatur des eintretenden Gases, die über das Thermoelement 30 gemessen wird, über die Heizeinrichtung 14 eingestellt werden und es kann weiters die Temperatur des Wassers im Behälter 23, welche über ein Thermoelement 31 gemessen wird, über die Temperiereinrichtung 24 justiert werden. Falls erwünscht, kann auch die Temperatur des aus der Kolonne austretenden Gases über das Thermoelement 32 gemessen werden. Die Kontamination des austretenden Gases kann über die Sonde 33 bestimmt werden, wobei jeweils Gasproben gezogen werden und diskontinuierlich einem Gaschromatographen bekannter Bauart zugeführt werden. Werden noch Kontaminationen im Gas festgestellt, so wird die Leistung des Gebläses 9 herabgesetzt, so daß geringere Mengen an Gas und damit Schadstoff pro Zeiteinheit durch die Kolonne 1 geleitet werden, womit unterschiedlichen Konzentrationen der Schadstoffe im Gasstrom besonders einfach Rechnung getragen werden kann.

### Beispiel 1:

In die Kolonne wurde in den einzelnen Schüssen Rindenkompost aus einem Gemisch von Holzchips, Tannen-, Fichten- und Föhrenrinden durch Schütten eingebracht. Ca. 85 Gew.-% des Substrates wies eine Korngröße zwischen 2 cm und 10 cm auf. Der Rindenkompost wurde vor seiner Einbringung mit einer Mischkultur aus Acinetobacter sp., Corynebacterium sp., Candida-Hefen, Flavobacter sp., Kurthia sp., Pseudomonas aeruginosa, Pseudomonas alcaligenes, Pseudomonas cepacia, Pseudomonas fluorescens, Pseudomonas paucimobilis sowie Pseudomonas putida imprägniert.

Diese Mischkultur wurde einem treibstoffkontaminierten Erdreich einer Tankstelle in Korneuburg nordwestlich von Wien entnommen. Ein Gasstrom, beladen mit Benzol, Toluol, Methylcyclohexan n-Pentan, n-Hexan, n-Heptan und n-Octan, entsprechend 780 mg organisch C/m³, wurde in einer Menge von 3,83 m³/h dem Prallfilter zugeführt. In diesem wurde der Gasstrom von anhaftenden Flüssigkeitströpfchen und Feststoffen befreit und wurde anschließend über die Heizeinrichtung 14 auf 25° C der Temperatur des Substrates erwärmt, wobei die Steuerung über das Thermoelement 30 und der Temperatur des austretenden Gases, die über das Thermoelement 32 am Ausgang der Kolonne gemessen wurde, gesteuert wurde. In den Gasstrom wurde sodann 0,25 kg Wasser/m³ Gas und Stunde eingesprüht. Das Substrat hat eine Raumerfüllung von 60 Vol.-%. Daraus ergibt sich eine mittlere Gasgeschwindigkeit in der Kolonne von 4,17 . 10⁻² m/s. Über die Wasserverteileinrichtungen gelangten jeweils in diskontinuierlichem Betrieb 90 g Wasser bzw. Nährlösung pro Stunde in das Substrat. Um eine ausreichende Versorgung des Substrates mit Wasser sicherzustellen, wird mit Überschuß gearbeitet, so daß im Sumpf 26 Wasser gesammelt wird. Sowohl das Wasser als auch der Gasstrom werden in Richtung der Schwerkraft geleitet. Das Gas wies eine Verweilzeit von 90 min im Behälter auf und wies beim Austritt aus derselben eine Konzentration von 70 mg organisch C/m³ an Kontaminaten auf. Dem temperierten Wasser waren die im folgenden angeführten Nährsalze bzw. Spurenelemente in Gramm pro Liter zugefügt und gelangten drucklos über die Wasserverteileinrichtung auf das Substrat, wobei die Austrittsöffnungen nach unten gerichtet sind. Nach 24 Stunden konnte eine ungleichmäßige Gasstromverteilung beobachtet werden, worauf die Ringe 4 fünfzehn Minuten mit einer Frequenz von 1 Hertz vibrieren gelassen wurden. Der Gasstrom bewegte sich anschließend wieder gleichmäßig durch die Kolonne. In einem abgebrochenen Versuch wurde die Verdichtung der Randbereiche unterlassen, worauf nach 72 Stunden die Abbauleistung der Kolonne von 2,6 g/h auf 0,53 g/h gesunken ist.

Es konnten somit 2,6 g organisch C Kontaminat pro Stunde abgebaut werden. Wenn durch Konzentrationsschwankungen des Kontaminates der austretende Gasstrom noch mit Kontaminat beladen war, wurde die Gasströmungsgeschwindigkeit gesenkt.

Nährsalzlösung enthaltend pro Liter Wasser:
- 10 g: Ammoniumsulfat
- 10 g: Dikaliumhydrogenphosphat
- 5 g: Kaliumdihydrogenphosphat
- 1 g: Magnesiumsulfat - Heptahydrat
- 1 g: Natriumchlorid
- 1 ml: Spurenelementlösung
pH-Wert 7,2.

Spurenelementlösung in einem Liter Wasser:
- 0,5 g: Borsäure
- 0,04 g: Kupfersulfat - Pentahydrat
- 0,1 g: Kaliumjodid
- 0,2 g: Eisenchlorid
- 0,6 g: Mangansulfat - Hydrat
- 0,2 g: Ammoniummolybdat - Tetrahydrat
- 0,2 g: Zinksulfat - Heptahydrat.

Die Nährlösung bzw. das Wasser, die bzw. das auf das Substrat aufgebracht wird, kann auch Tenside enthalten.

Das Substrat wurde mit den Nährsalzen und Spurenelementen vor dem Einbringen in die Kolonne, u. zw. mit 30 g Vollkorn Nitrastop der Firma Agrolinz pro kg Kompost in fester Form vermengt.

Das Substrat kann weiters mit einem inerten Stoff, z. B. Schaumstoff aus Polyurethan, Blähton oder Ziegelsplit, gemischt sein.

### Beispiel 2:

Es wurde gemäß Beispiel 1 verfahren, wobei das zu dekontaminierende Gas in der Kolonne unten eingeleitet und oben abgezogen wurde, so daß das flüssige Wasser und der Gasstrom im Gegenstrom zueinander geführt waren. Der Abbau an Kontaminaten betrug lediglich 1,49 g organisch C/h am Beginn und sank stetig ab und war nach sechs Tagen nurmehr 0,57 g organisch C/h.

### Beispiel 3:

Es wurde gemäß Beispiel 1 verfahren, wobei als Substrat Müllkompost aus einer Kompostanlage der Gemeinde Wien zum Einsatz gelangt ist. Die Beimpfung des Substrates erfolgte entsprechend Beispiel 1. Der aus der Kolonne abgezogene Gasstrom wies eine Konzentration von 200 mg organisch C/m³ an Kontaminat auf.

### Beispiel 4:

Es wurde gemäß Beispiel 1 verfahren, wobei der Luftstrom und das Substrat nicht befeuchtet wurde. Die Abbauleitung der Kolonne sank nach zehn Tagen von 2,6 g organisch C/h auf Null ab. Es konnte eine fast völlige Austrocknung des Substrates beobachtet werden.

### Beispiel 5:

Es wurde gemäß Beispiel 1 verfahren, wobei der Rindenkompost jedoch nicht mit einem festen Dünger vermischt wurde. Weiters wurde keine Nährstofflösung auf das Substrat aufgebracht. Die Abbauleistung betrug lediglich 0,2 g organisch C/h.

## Patentansprüche

1. Verfahren zum aeroben mikrobiologischen Dekontaminieren von Gasen, insbesondere Luft, welche mit gasförmigen und/oder bei Raumtemperatur flüchtigen organischen Substanzen und Mischungen dieser, z. B. Benzine, Dieselöle, Grubengase, Abluft aus Kläranlagen od. dgl., beladen ist, mit einer Schüttung mit festem, mikrobiologisch abbaubarem Substrat, z. B. Rinden, Kompost, Rindenkompost, Holzchips, Klärschlammkompost, Grünkompost, mit Mikroorganismen, wobei in das zumindest in einem Behälter angeordnete Substrat feuchtes kontaminiertes Gas, aus dem gegebenenfalls feste Teilchen und/oder Flüssigkeitstropfen abgeschieden wurden, eingeleitet und aus diesem abgezogen wird, und der Feuchtigkeitsgehalt des Substrates gesteuert wird, wobei das Substrat zeitweise mit flüssigem Wasser beaufschlagt wird, dadurch gekennzeichnet, daß das zu reinigende Gas im Gleichstrom mit dem flüssigen Wasser geführt wird und in Richtung Schwerkraft strömt.

2. Verfahren nach Anspruch 1, dadurch gekennzeichnet, daß mit dem flüssigen Wasser in das Substrat Nährstoffe, insbesondere stickstoff-, phosphor- und kalihaltige Salze eingebracht werden.

3. Verfahren nach Anspruch 1 oder 2, dadurch gekennzeichnet, daß dem Substrat die Oberflächenspannung des Wassers herabsetzende Substanzen zugeführt werden.

4. Verfahren nach Anspruch 1, 2 oder 3, dadurch gekennzeichnet, daß das aus dem Substrat austretende flüssige Wasser in das Substrat rückgeführt wird.

5. Verfahren nach einem der Ansprüche 1 bis 4, dadurch gekennzeichnet, daß zumindest 80 Gew.-% des zeitweise mit flüssigem Wasser beaufschlagten Substrates eine Korngröße zwischen 2 cm und 10 cm aufweist.

6. Verfahren nach einem der Ansprüche 1 bis 5, dadurch gekennzeichnet, daß das mit flüssigem Wasser beaufschlagte Substrat in den Behälter lose geschüttet wird.

7. Verfahren nach einem der Ansprüche 1 bis 6, dadurch gekennzeichnet, daß das Substrat an den Rändern zu der Behälterwandung zeitweise verdichtet wird.

8. Verfahren nach einem der Ansprüche 1 bis 7, dadurch gekennzeichnet, daß das mit Wasser beaufschlagte Substrat mit inertem Substrat, z. B. Polyurethanschaum, Blähton, Ziegelsplitt od. dgl., gemischt wird.

9. Verfahren nach einem der Ansprüche 1 bis 8, dadurch gekennzeichnet, daß das flüssige Wasser aus Düsen, die nach unten gerichtet sind, auf das Substrat gesprüht wird.

10. Verfahren nach einem der Ansprüche 1 bis 8, dadurch gekennzeichnet, daß das flüssige Wasser im wesentlichen drucklos in das Substrat eintritt.

11. Verfahren nach einem der Ansprüche 1 bis 10, dadurch gekennzeichnet, daß das flüssige Wasser vor dem Eintritt in den Behälter auf die Temperatur des Substrates eingestellt wird.

12. Verfahren nach einem der Ansprüche 1 bis 11, dadurch gekennzeichnet, daß das Gas vor dem Eintritt in den Behälter mit Wasser beladen wird.

13. Verfahren nach Anspruch 12, dadurch gekennzeichnet, daß das Gas vor dem Eintritt in den Behälter mit Wasser beladen wird, das zumindest die Temperatur des Substrates im Behälter aufweist.

14. Verfahren nach einem der Ansprüche 1 bis 13, dadurch gekennzeichnet, daß das Gas nach der Abscheidung von Feststoffen und/oder Flüssigkeitstropfen mit Wasser beladen wird.

15. Verfahren nach einem der Ansprüche 1 bis 14, dadurch gekennzeichnet, daß das Gas mit einer Strömungsgeschwindigkeit von 0,01 m/s bis 0,2 m/s, insbesondere 0,0135 m/s bis 0,135 m/s, durch das Substrat bewegt wird.

16. Verfahren nach einem der Ansprüche 1 bis 15, dadurch gekennzeichnet, daß das Gas vor der Beladung mit Wasser auf die mittlere Temperatur des Substrates erwärmt wird.

17. Verfahren nach einem der Ansprüche 1 bis 16, dadurch gekennzeichnet, daß im austretenden Gas die Konzentration der Kontaminationen gemessen wird und bei Überschreiten einer vorgegebenen Konzentration die Strömungsgeschwindigkeit des Gases herabgesetzt wird.

18. Verfahren nach einem der Ansprüche 1 bis 17, dadurch gekennzeichnet, daß zur Bestimmung der mittleren Temperatur des Substrates die Temperatur des austretenden Gases gemessen wird.

19. Verfahren nach einem der Ansprüche 1 bis 18, dadurch gekennzeichnet, daß das Substrat mit Spurenelementen und Nährstoffen, insbesondere stickstoff-, phosphor- und kalihaltige Salze, vor dem Einbringen in den Behälter beladen, insbesondere vermengt, wird.
